# EUROPEAN PATENT SPECIFICATION

(11) **EP 3 450 499 B1**
(45) Date of publication and mention of the grant of the patent: **01.11.2023**
(21) Application number: 17789729.5
(22) Date of filing: 28.04.2017
(51) Int. Cl.: C08G 59/24, C08L 61/34, C08G 59/50, C08G 59/62, C08G 59/64, C08L 79/04, C08G 14/06

(54) **COMPOSITION FOR CURABLE RESIN, AND CURED PRODUCT THEREOF**
ZUSAMMENSETZUNG FÜR HÄRTBARES HARZ UND GEHÄRTETES PRODUKT DARAUS
COMPOSITION POUR UNE RÉSINE DURCISSABLE ET PRODUIT DURCI CORRESPONDANT

(30) Priority: 28.04.2016 JP 2016091115; 27.09.2016 JP 2016188911
(43) Date of publication of application: 06.03.2019
(73) Proprietor: ENEOS Corporation, Tokyo (JP)
(72) Inventor: MINAMI Masaki, Tokyo 100-8162 (JP); KAMEYAMA Atsushi, Tokyo 100-8162 (JP); UENO Ryuichi, Tokyo 100-8162 (JP)
(74) Representative: Carpmaels & Ransford LLP
(86) International application number: PCT/JP2017/017066
(87) International publication number: WO 2017/188448

(56) References cited:
- EP-A1- 2 952 535
- WO-A1-2010/092723
- WO-A1-2012/015604
- WO-A1-2015/163362
- WO-A1-2018/105743
- WO-A1-2018/181857
- JP-A- H05 230 168
- JP-A- 2006 233 188
- JP-A- 2010 174 073
- JP-A- 2013 253 123
- JP-A- 2015 535 865
- JP-A- 2016 047 903

## Description

The present invention relates to a curable resin composition containing a particular polyfunctional benzoxazine compound and a particular polyfunctional epoxy compound, and further relates to a cured product that is an addition polymerization product of the curable resin composition.

A benzoxazine compound is a compound having a benzoxazine ring containing a benzene skeleton and an oxazine skeleton. A cured product (polymerization product) of the benzoxazine compound is referred to as a benzoxazine resin. The benzoxazine resin is excellent in properties such as heat resistance and mechanical strength, and therefore has been used as a high-performance material for many purposes in various fields.

Patent Publication 1 discloses a novel benzoxazine compound having a particular structure and a method for producing the same. Patent Publication 1 describes that this benzoxazine compound has a high heat conductivity and can be used for producing a cured benzoxazine resin product having a high heat conductivity.

Patent Publication 2 discloses a heat-hardened polybenzoxazine resin having a main chain containing a particular benzoxazine ring structure, some or all of the reactive ends of the resin being protected. Patent Publication 2 describes that the heat-hardened resin exhibits an excellent storage stability when dissolved a solvent.
Patent Publication 1: JP 2013-60407 A
Patent Publication 2: JP 2012-36318 A WO2012015604A1 relates to a solvent-free thermosetting resin composition including a benzoxazine component, a liquid epoxy compound and a toughening agent comprising a phenol-terminated polyurethane, polyurea or polyurea-urethane

However, in the fields of adhesive, sealant, paint, matrix resin for composite material, and the like, there has been a demand for a cured resin that has a higher heat resistance and a higher deformation resistance with a sufficient strength to meet severer conditions. Conventional cured benzoxazine resin products are insufficient in the properties. Accordingly, an object of the present invention is to provide a benzoxazine compound-containing curable resin composition, which can be used for producing a cured product having a high heat resistance and a high deformation resistance, and a cured product obtained from the curable resin composition.

As a result of intense research in view of the above object, the inventors have developed a novel curable resin composition containing a particular polyfunctional benzoxazine compound and a particular polyfunctional epoxy compound, and have found that a cured product obtained from the composition has an excellent strength and an excellent heat resistance and further has a high elasticity and an excellent deformation resistance. The present invention has been accomplished based on this finding.

The invention is defined by the appended claims. According to the present invention, there is provided a curable resin composition, comprising (A) a polyfunctional benzoxazine compound having at least two benzoxazine rings and (B) a polyfunctional epoxy compound having at least one norbornane structure and at least two epoxy groups. Compound (B) is an alicyclic epoxy compound. The polyfunctional benzoxazine compound of (A) is a first benzoxazine compound or a second benzoxazine compound. The first benzoxazine compound is a compound having at least two benzoxazine ring structures represented by the following formula (1), and the benzene rings in the two benzoxazine ring structures are bonded to each other. The second benzoxazine compound is represented by the following formula (2).

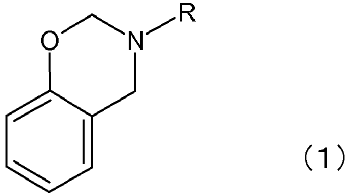

In the formula (1), R is an acyclic alkyl group having 1 to 12 carbon atoms, a cyclic alkyl group having 3 to 8 carbon atoms, or an aryl group having 6 to 14 carbon atoms. The aryl group may have a substituent of a halogen atom or an acyclic alkyl group having 1 to 12 carbon atoms.

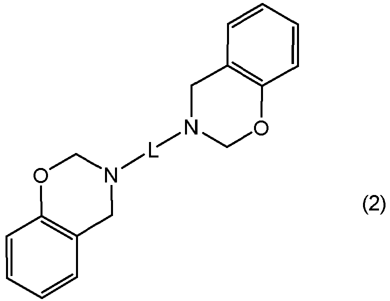

In the formula (2), L is a divalent organic group having 1 to 5 aromatic rings or an alkylene group having 2 to 10 carbon atoms.

According to another aspect of the present invention, there is provided a cured product obtained by hardening the curable resin composition containing the polyfunctional benzoxazine compound of (A) and the polyfunctional epoxy compound of (B).

The curable resin composition of the present invention is a novel composition containing the polyfunctional benzoxazine compound of (A) and the polyfunctional epoxy compound of (B). The cured product of the composition has an excellent heat resistance, a high heat decomposition resistance, and a high glass-transition temperature. Furthermore, the cured product further has an excellent mechanical strength. Therefore, the curable resin composition of the present invention can be used for many purposes, e.g. for a material requiring a high heat resistance and a high impact resistance, such as an adhesive, sealant, paint, or matrix resin for composite material. In addition, the cured product of the present invention can exhibit an excellent toughness under high temperature and/or high impact loading.

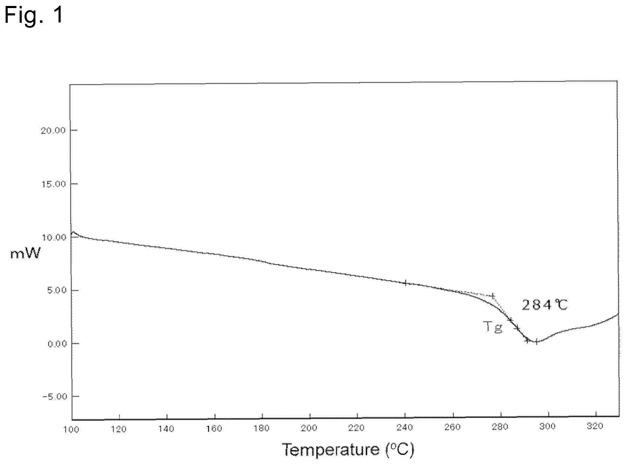

Fig. 1 is a graph illustrating DSC measurement results of Example 6 and the glass-transition temperature (Tg) determined in the measurement.

A curable resin composition according to the present invention contains (A) a polyfunctional benzoxazine compound having at least two benzoxazine rings and (B) a polyfunctional epoxy compound having at least one norbornane structure and at least two epoxy groups. Compound (B) is an alicyclic epoxy compound. The curable resin composition is hereinafter referred to simply as the composition, the polyfunctional benzoxazine compound is hereinafter referred to as the component (A), and the polyfunctional epoxy compound is hereinafter referred to as the component (B). In the present invention, each of the components (A) and (B) may be a compound usable as a monomer, and some or all of molecules of the compound may be reacted to generate an oligomer. Thus, in the composition of the present invention, each of the components (A) and (B) may form a prepolymer, which is a precursor of the cured resin.

The component (A) is a first benzoxazine compound or a second benzoxazine compound. The composition of the present invention may contain a plurality of types of the first benzoxazine compounds, may contain a plurality of types of the second benzoxazine compounds, and may contain the first benzoxazine compound and the second benzoxazine compound, as the component (A). The composition may contain a benzoxazine compound different from the first and second benzoxazine compounds.

The first benzoxazine compound is a compound having at least two benzoxazine ring structures represented by the following formula (1).

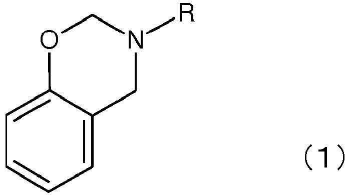

In the formula (1), R is an acyclic alkyl group having 1 to 12 carbon atoms, a cyclic alkyl group having 3 to 8 carbon atoms, or an aryl group having 6 to 14 carbon atoms. The aryl group may have a substituent of a halogen atom or an acyclic alkyl group having 1 to 12 carbon atoms. In the first benzoxazine compound, the benzene rings in the two benzoxazine ring structures of the formula (1) are bonded to each other. The benzene rings may be connected via a linking group, and may be directly connected with each other without the linking group. The benzene rings in the benzoxazine ring structures of the formula (1) may have a substituent.

The first benzoxazine compound has a plurality of the benzoxazine ring structures represented by the formula (1), and R's in the structures may be the same as or different from each other. The first benzoxazine compound may have another benzoxazine ring structure different from the benzoxazine ring structure represented by the formula (1).

It is preferred that the first benzoxazine compound is a compound represented by the following formula (1a).

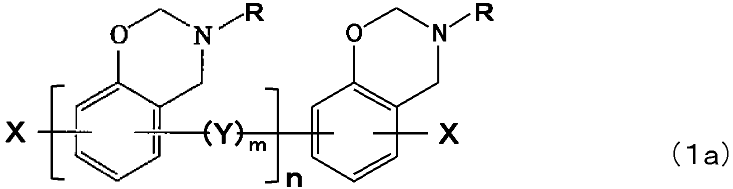

In the formula (1a), R is an acyclic alkyl group having 1 to 12 carbon atoms, a cyclic alkyl group having 3 to 8 carbon atoms, or an aryl group having 6 to 14 carbon atoms. The aryl group may have a substituent of a halogen atom or an acyclic alkyl group having 1 to 12 carbon atoms. A plurality of R's in the formula (1a) may be the same as or different from each other. X is a hydrogen atom or a hydrocarbon group having 1 to 6 carbon atoms. A plurality of X's in the formula (1a) may be the same as or different from each other. Y is an alkylene group having 1 to 6 carbon atoms, an oxygen atom, a sulfur atom, an SO₂ group, or a carbonyl group. m is 0 or 1, and n is an integer of 1 to 10. When m is 0, the benzene rings are directly connected with each other without the linking group.

When R in the formula (1) or (1a) is an acyclic alkyl group having 1 to 12 carbon atoms, specific examples of the acyclic alkyl groups include a methyl group, an ethyl group, a propyl group, an isopropyl group, an n-butyl group, an isobutyl group, and a t-butyl group. When R is a cyclic alkyl group having 3 to 8 carbon atoms, specific examples of the cyclic alkyl groups include a cyclopentyl group and a cyclohexyl group. When R is an aryl group having 6 to 14 carbon atoms, specific examples of the aryl groups include a phenyl group, a 1-naphthyl group, a 2-naphthyl group, a phenanthryl group, and a biphenyl group. When R is an aryl group having 6 to 14 carbon atoms and having a substituent of a halogen atom or an acyclic alkyl group having 1 to 12 carbon atoms, specific examples of the aryl groups include an o-tolyl group, an m-tolyl group, a p-tolyl group, a xylyl group, an o-ethylphenyl group, an m-ethylphenyl group, a p-ethylphenyl group, an o-t-butylphenyl group, an m-t-butylphenyl group, a p-t-butylphenyl group, an o-chlorophenyl group, and an o-bromophenyl group. It is preferred that R is selected from the group consisting of a methyl group, an ethyl group, a propyl group, a phenyl group, and an o-methylphenyl group, which are excellent in handling characteristics.

Specific examples of such first benzoxazine compounds include compounds of the following formula (1X) and oligomers prepared by polymerizing the compounds.

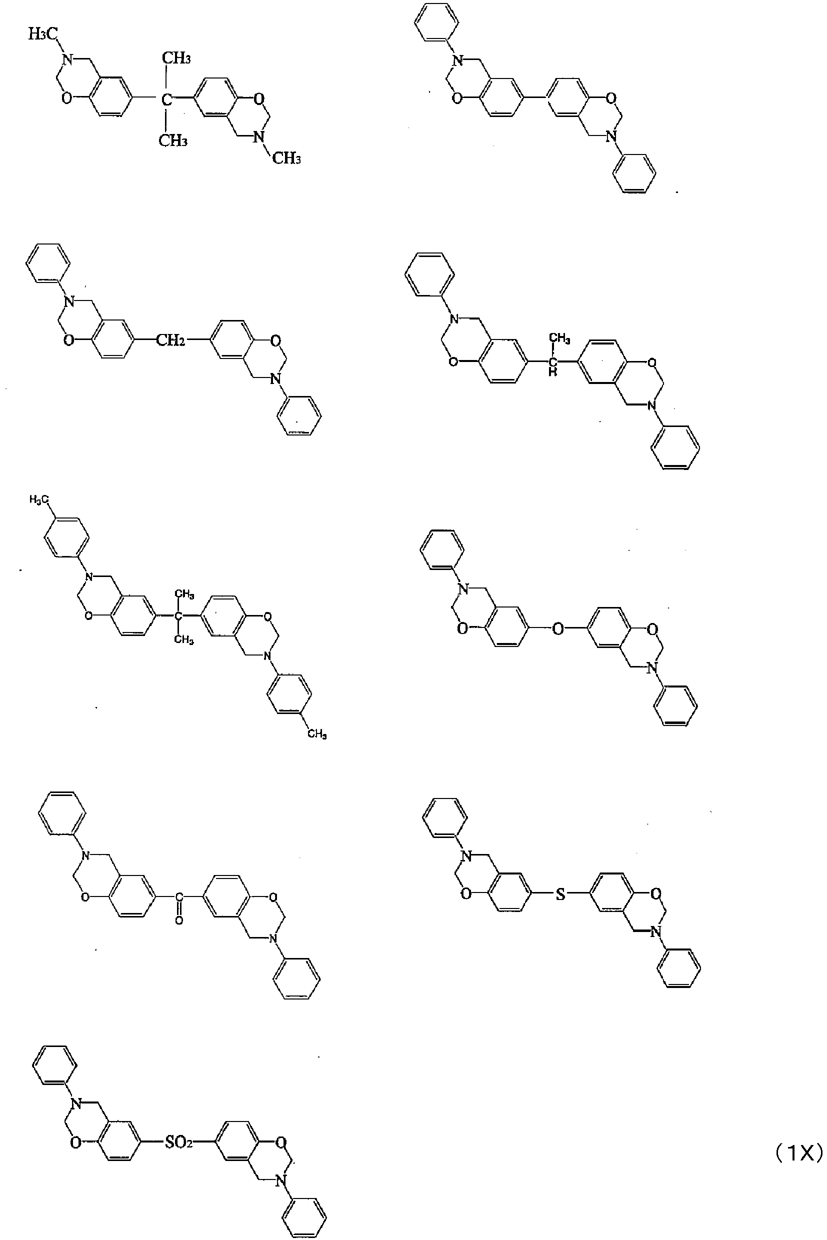

The second benzoxazine compound is a compound represented by the following formula (2).

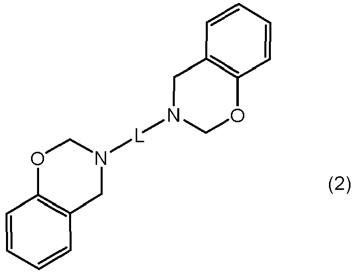

In the formula (2), L is a divalent organic group having 1 to 5 aromatic rings or an alkylene group having 2 to 10 carbon atoms. The composition of the present invention may contain a plurality of types of the second benzoxazine compounds represented by the formula (2) having different L's.

When L in the formula (2) is a divalent organic group having 1 to 5 aromatic rings, the divalent organic group may have a monocyclic structure, a polycyclic structure, a condensed ring structure, or the like. The divalent organic group may contain an oxygen atom and/or a sulfur atom. Specific examples of the organic groups include groups of the following formula (3).

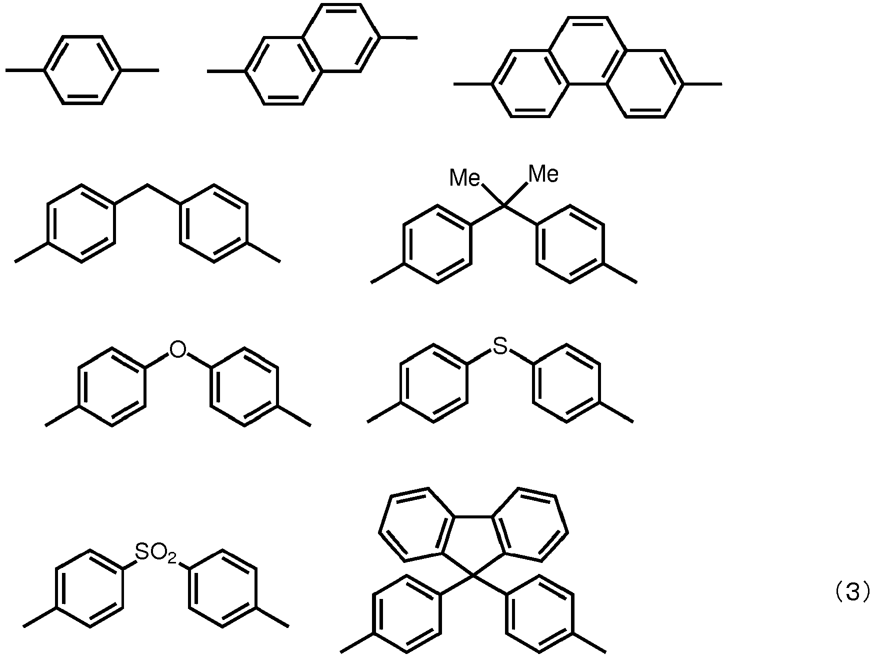

Specific examples of such second benzoxazine compounds include compounds of the following formula (2X) and oligomers prepared by polymerizing the compounds.

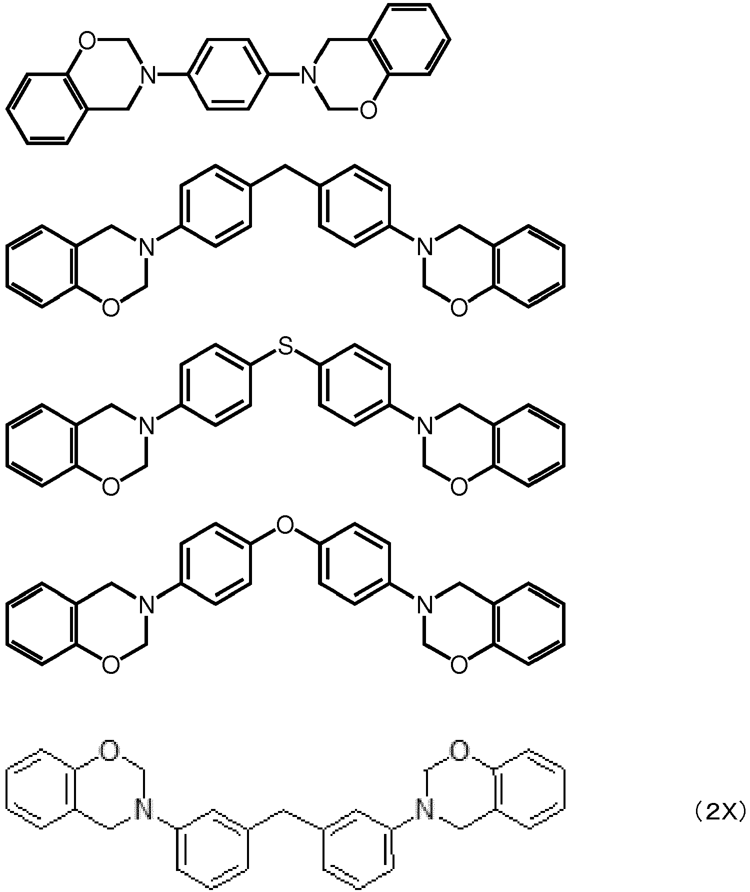

A method for preparing the component (A) is not particularly limited. A commercially-available product may be used as the component (A). Examples of the commercially-available products include bisphenol F-aniline type (F-a type) benzoxazine compounds and phenol-diaminodiphenylmethane type (P-d type) benzoxazine compounds available from Shikoku Chemicals Corporation.

The component (B) is the polyfunctional epoxy compound having at least one norbornane structure and at least two epoxy groups. The composition of the present invention may contain a plurality of types of the polyfunctional epoxy compounds as the component (B). The component (B) is an alicyclic epoxy compound, and is preferably a compound having a 5-membered ring structure, 6-membered ring structure, or norbornane ring structure having an epoxy group shown in the following formula (4).

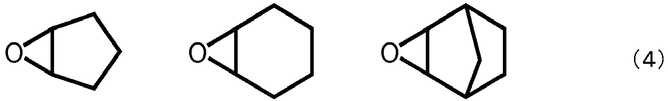

Specific examples of the components (B) include the compounds of the following formula (5).

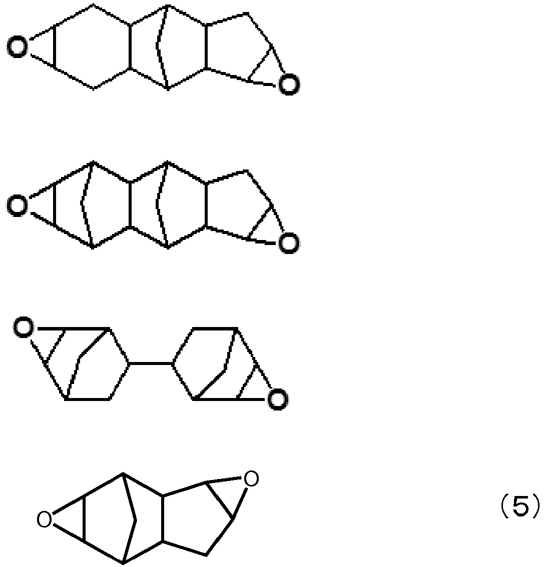

An example of production of the component (B) will be described below. For example, as shown in the following formula (6), the compound (5-1) can be produced by carrying out a reaction between the compound (a) and meta-chloroperbenzoic acid. The compound (a) can be synthesized by the Diels-Alder reaction between butadiene and dicyclopentadiene.

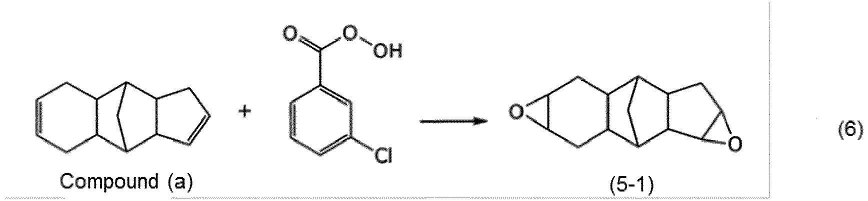

As shown in the following formula (7), the compound (5-2) can be produced by carrying out a reaction between the compound (b) (tricyclopentadiene) and meta-chloroperbenzoic acid. The compound (b) can be synthesized by the Diels-Alder reaction between cyclopentadiene and dicyclopentadiene.

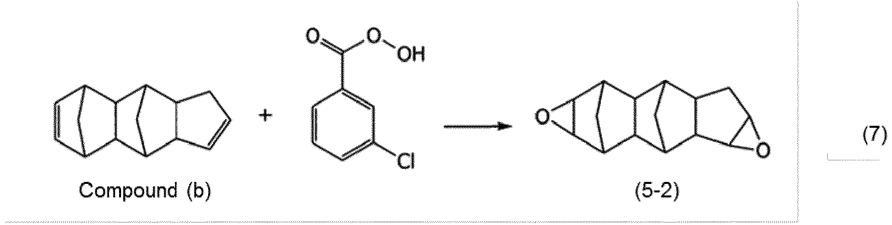

As shown in the following formula (8), the compound (5-3) can be produced by carrying out a reaction between the compound (c) and meta-chloroperbenzoic acid. The compound (c) can be synthesized by the Diels-Alder reaction between butadiene and cyclopentadiene.

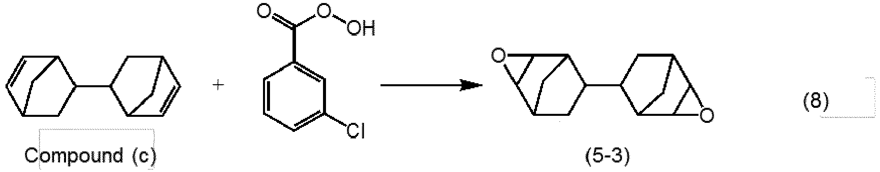

The compound (5-4) shown below can be produced by carrying out a reaction between dicyclopentadiene and potassium peroxymonosulfate (Oxone). The compound (5-4) is a dicyclopentadiene diepoxide, and is commercially available from Shandong Qihuan Biochemical Co., Ltd., etc. The commercially-available product can be used as the compound (5-4) in the present invention.

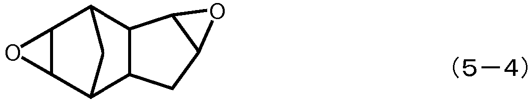

The content of the component (B) is preferably at least 5 parts by mass and at most 100 parts by mass, more preferably at least 10 parts by mass and at most 50 parts by mass, per 100 parts by mass of the component (A). The content of the component (B) within the preferred range can result in an excellent heat resistance. In a case where the composition of the present invention contains a plurality of types of the polyfunctional benzoxazine compounds as the component (A), the total content of these compounds is considered as 100 parts by mass. In a case where the composition of the present invention contains a plurality of types of the polyfunctional epoxy compounds as the component (B), the content of the component (B) is the total content of these compounds.

The composition of the present invention may further contain (C) at least one curing agent as an optional component. The curing agent is hereinafter referred to as the component (C).

Examples of the components (C) include aromatic amine compounds (such as diethyltoluenediamine, meta-phenylenediamine, diaminodiphenylmethane, diaminodiphenylsulfone, meta-xylenediamine, and derivatives thereof), aliphatic amines (such as triethylenetetramine and isophoronediamine), imidazole compounds (such as imidazole and imidazole derivatives), dicyandiamide, tetramethylguanidine, carboxylic acid anhydrides (such as methylhexahydrophthalic anhydride), carboxylic acid hydrazides (such as adipic acid hydrazide), carboxylic acid amides, monofunctional phenol compounds, polyfunctional phenol compounds (such as bisphenol A, bisphenol sulfides, and polyphenol compounds), polymercaptan compounds, carboxylate salts, and Lewis acid complexes (such as boron trifluoride ethylamine complexes). These curing agents may be used alone or as a mixture of two or more. It is preferred that the composition of the present invention contains at least one curing agent selected from the group consisting of the imidazole compounds, the aromatic amine compounds, and the polyfunctional phenol compounds as the component (C).

The content of the component (C) is preferably more than 0 parts by mass and not more than 40 parts by mass, more preferably more than 0 parts by mass and not more than 30 parts by mass, per 100 parts by mass of the component (A). The composition of the present invention can be hardened by heating without using the component (C). When the composition contains the component (C) and the content of the component (C) is within the above range, the hardening reaction can be carried out more efficiently. In a case where the composition of the present invention contains a plurality of types of the curing agents as the component (C), the content of the component (C) is the total content of these curing agents.

The composition of the present invention may contain a benzoxazine compound different from the component (A) and/or an epoxy compound different from the component (B) as long as the advantageous effects of the present invention are not deteriorated. A monofunctional benzoxazine compound having one benzoxazine ring may be added to the composition to lower the viscosity of the composition.

The composition of the present invention may contain a nanocarbon material, a flame retardant, a mold release agent, or the like, as long as the properties of the composition are not deteriorated.

Examples of the nanocarbon materials include carbon nanotubes, fullerenes, and derivatives thereof.

Examples of the flame retardants include red phosphorus, phosphoric acid esters (such as triphenyl phosphate, tricresyl phosphate, trixylenyl phosphate, cresyl diphenyl phosphate, xylenyl diphenyl phosphate, resorcinol bisphenyl phosphate, and bisphenol A bisdiphenyl phosphate), and boric acid esters.

Examples of the mold release agents include silicon oils, stearic acid esters, and carnauba waxes.

In a case where the composition of the present invention is hardened (cured) to prepare a molded film product as a cured product, a solvent may be added to the composition to obtain a viscosity suitable for forming a thin film. The solvent is not particularly limited as long as the component can be dissolved therein. Examples of the solvents include hydrocarbons, ethers, esters, and halogen-containing solvents. In a case where the composition contains the solvent, the cured product can be prepared by the steps of applying the solution of the composition to a base material or the like, vaporizing the solvent, and subjecting the residue to heat hardening.

In the composition of the present invention, the mass ratio of the component (A) to all the components other than the solvent is preferably at least 10% by mass and at most 95% by mass, more preferably at least 20% by mass and at most 92% by mass, further preferably at least 30% by mass and at most 90% by mass, in view of moldability, hardening property, workability, and the like. In general, the solvent is removed in a process of hardening the composition to prepare the cured product. Therefore, the properties of the cured product are hardly affected by the content of the solvent in the composition.

The composition of the present invention can be produced by kneading or mixing the components (A) and (B), and optionally the component (C), the other additive, and the solvent, in an appropriate apparatus.

A method for the kneading or mixing is not particularly limited, and examples thereof include methods using a kneader, planetary mixer, twin-screw extruder, or the like. For example, in a case where the components (A) and (B) are in high-viscosity liquid states at room temperature, the components (A) and (B) may be kneaded under a heat condition, pressurized condition, or reduced pressure condition, as necessary. It is preferred from the viewpoint of storage stability that the composition is stored in a refrigerator or a freezer immediately after the kneading.

In a case where the composition of the present invention is used for preparing a prepreg for an FRP, the viscosity of the composition at 50°C is preferably 10 to 3000 Pa·s, more preferably 10 to 2500 Pa·s, most preferably 100 to 2000 Pa·s. In a case where the composition is used for forming a sealant or a coating, the viscosity of the composition is not particularly limited as long as the sealing or application process can be carried out without trouble.

The composition of the present invention can be hardened (cured) by carrying out ring-opening polymerization of the components (A) and (B) under the same conditions as those for a known benzoxazine or epoxy compound. For example, the cured product of the present invention can be produced by heating the composition of the present invention at a temperature of 180°C to 300°C for a period of 30 minutes to 10 hours.

The composition of the present invention can be used for producing a cured product having a heat resistance and a high deformation resistance with a sufficient strength. The composition of the present invention seems to be useful for producing such excellent cured product for the following reasons. When a benzoxazine compound is homopolymerized, phenolic hydroxyl groups are generated by the polymerization. The phenolic hydroxyl groups may undergo keto-enol tautomerization at a high temperature (e.g. 200°C or higher), whereby the polymer chain may be cleaved, resulting in a low heat resistance and a low glass-transition temperature. In the present invention, the component (B) is hardly homopolymerized, and is reacted with phenolic hydroxyl groups derived from the benzoxazine rings, so that the cleavage of the polymer chain can be prevented. Furthermore, since the components (A) and (B) are polyfunctional compounds, the resultant cured product has an increased crosslinking density. In addition, since the component (B) has the rigid norbornane structure, also the resultant cured product has an excellent rigidity as well as a high elasticity. Consequently, the composition of the present invention seems to be useful for producing the cured product having a high heat resistance and a high deformation resistance with a sufficient strength for the combination of the several reasons.

When the cured product is used as a sealant, it is preferred from the viewpoint of the heat resistance that the cured product has a glass-transition temperature of 200°C or higher. The glass-transition temperature of the cured product is preferably 220°C or higher, particularly preferably 240°C or higher.

The present invention will be described more specifically below with reference to Examples and Comparative Examples without intention of restricting the scope of the invention.

### <Component (A); Polyfunctional benzoxazine compound (referred to simply as "Benzoxazine" in Tables 1 and 2) >

(A1); Bisphenol F-aniline type (F-a type) benzoxazine compound of the following formula (1-1), available from Shikoku Chemicals Corporation. 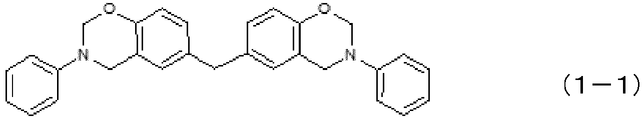
(A2); Phenol-diaminodiphenylmethane type (P-d type) benzoxazine compound of the following formula (2-1), available from Shikoku Chemicals Corporation.

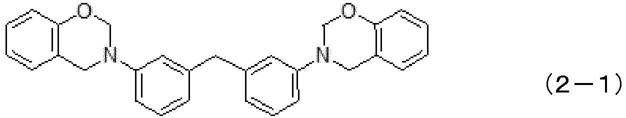

### <Component (B) or (B'); Polyfunctional epoxy compound (referred to simply as "Epoxy" in Tables 1 and 2)> (B1); Compound (5-1)

The compound (a) shown in the above formula (6) was synthesized by a method described in Shoichi Tsuchida, et. al., "Diels-Alder Reaction between Butadiene and Cyclopentadiene, Determination of Trimers", Journal of The Japan Petroleum Institute, 1972, Volume 15, Issue 3, Pages 189-192. 15.9 L of chloroform and 1.6 kg of the compound (a) were introduced into a reaction vessel, and 4.5 kg of meta-chloroperbenzoic acid was added dropwise thereto while stirring at 0°C. The obtained mixture was heated to the room temperature, and the reaction shown in the formula (6) was carried out for 12 hours. A by-product of meta-chlorobenzoic acid was removed from the resultant mixture by filtration. The filtrate was washed with a 1-N aqueous sodium hydroxide solution three times, and was further washed with a saturated sodium chloride solution. The organic layer was dried over magnesium sulfate, the magnesium sulfate was removed by filtration, and the filtrate was concentrated to obtain a crude product. 2 kg of toluene was added to the crude product, and the crude product was dissolved at the room temperature. 6 kg of heptane was added dropwise to the solution to conduct crystallization, and the resultant was aged at 5°C for 1 hour. The crystallized product was isolated by filtration, washed with hexane, and dried under a reduced pressure at 35°C for 24 hours, to obtain 1.4 kg of a white solid of the following compound (5-1).

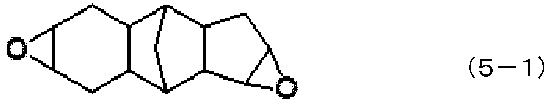

### (B2); Compound (5-2) (tricyclopentadiene diepoxide)

The compound (b) shown in the above formula (7) was synthesized in the same manner as the compound (a) by a method described in the above reference. 59.2 kg of chloroform and 4.0 kg of the compound (b) were introduced into a reaction vessel, and 10.6 kg of meta-chloroperbenzoic acid was added dropwise thereto while stirring at -10°C. The obtained mixture was heated to the room temperature, and the reaction shown in the formula (7) was carried out for 12 hours. A by-product of meta-chlorobenzoic acid was removed from the resultant mixture by filtration. The filtrate was washed with 42.0 kg of a 5% aqueous sodium sulfite solution. The organic layer was washed with 41.6 kg of a 1-N aqueous sodium hydroxide solution four times, and further washed with 48.0 kg of a saturated sodium chloride solution. The organic layer was dried over magnesium sulfate, the magnesium sulfate was removed by filtration, and the filtrate was concentrated to obtain 5.1 kg of a crude product. 3.5 kg of toluene was added to the crude product, and the crude product was dissolved at the room temperature. 13.7 kg of heptane was added dropwise to the solution to conduct crystallization, and the resultant was aged at 5°C for 1 hour. The crystallized product was isolated by filtration, washed with heptane, and dried under a reduced pressure at 35°C for 12 hours, to obtain 2.8 kg of a white solid of the following compound (5-2).

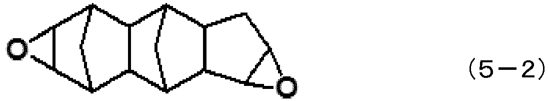

### (B3); Compound (5-3) (binorbornane diepoxide)

The compound (c) shown in the above formula (8) was synthesized in the same manner as the compound (a) by a method described in the above reference. 600 g of chloroform and 40.0 g of the compound (c) were introduced into a reaction vessel, and 100 g of meta-chloroperbenzoic acid was added dropwise thereto while stirring at -10°C. The obtained mixture was heated to the room temperature, and the reaction shown in the formula (8) was carried out for 12 hours. A by-product of meta-chlorobenzoic acid was removed from the resultant mixture by filtration. The filtrate was washed with 400 g of a 5% aqueous sodium sulfite solution. The organic layer was washed with 400 g of a 1-N aqueous sodium hydroxide solution four times, and further washed with 400 g of a saturated sodium chloride solution. The organic layer was dried over magnesium sulfate, the magnesium sulfate was removed by filtration, and the filtrate was concentrated to obtain 46.2 g of a crude product. 30 g of toluene was added to the crude product, and the crude product was dissolved at the room temperature. 130 g of heptane was added dropwise to the solution to conduct crystallization, and the resultant was aged at 5°C for 1 hour. The crystallized product was isolated by filtration, washed with heptane, and dried under a reduced pressure at 35°C for 12 hours, to obtain 30.2 g of a white solid of the following compound (5-3).

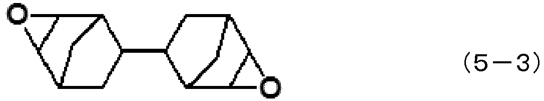

### (B4); Compound (5-4) (dicyclopentadiene diepoxide)

10 kg of dicyclopentadiene, 68 kg of sodium bicarbonate, 100 L of acetone, and 130 L of an ion-exchange water were introduced into a reaction vessel, and the resultant reaction liquid was cooled to a temperature of 10°C or lower. 84 kg of Oxone was added slowly to the reaction liquid while cooling to maintain the reaction liquid at a temperature of 30°C or lower, and the reaction liquid was stirred to carry out a reaction for 10 hours. Extraction with 100 L of ethyl acetate was carried out two times, and the organic layer was collected. Then, the organic layer was washed with 100 L of a mixed aqueous solution (containing 20% by weight of sodium chloride and 20% by weight of sodium thiosulfate), and was further washed with 100 L of an ion-exchange water two times. The washed organic layer was dried over magnesium sulfate, the magnesium sulfate was removed by filtration, and organic solvents were distilled away from the filtrate, to obtain 11 kg of a white solid of the following compound (5-4).

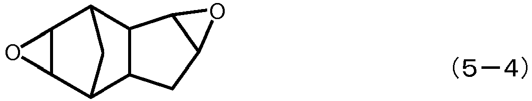

A component (B'), which had no norbornane structures, was used as an epoxy compound for Comparative Examples.

### (B'); CELLOXIDE (trademark) 2021P of the following formula (9), available from Daicel Corporation

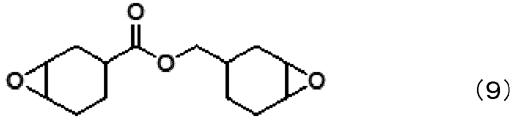

### <Component (C); Curing agent>

### (C1); Bis(4-hydroxyphenyl) sulfide (TDP) of the following formula (10), available from Tokyo Chemical Industry Co., Ltd.

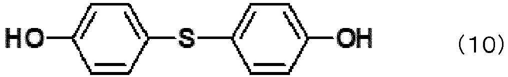

### (C2); SAN-AID SI-150 (cationic polymerization initiator) available from Sanshin Chemical Industry Co., Ltd.

### <Property evaluation of cured product>

A curable resin composition was injected into a mold having a thickness of 3 mm, and was hardened by heating. The following properties of the obtained cured product were measured. The conditions for the cured product preparation will be described hereinafter.

### (Glass-transition temperature Tg)

The glass-transition temperature Tg was determined by a differential scanning calorimetry DSC under conditions of an N₂ flow rate 20 mL/minute and a heating rate 20°C/minute using X-DSC-7000 available from Hitachi High-Tech Science Corporation.

### (Bending test 1)

A strip sample of a cured product having a size of 70 mm × 25 mm × 3 mm was prepared, and a three-point bending test according to JIS K 7171 was carried out under the following conditions to measure the bending strength, bending elastic modulus, and bending strain of the strip sample.
Testing apparatus; 5582 universal testing system available from Instron
Testing rate; 1.5 mm/minute
Supporting point distance; 48 mm
Sample pretreatment; None
Testing temperature; 23°C

### (Bending test 2)

The bending test 2 was carried out in the same manner as the bending test 1 except that the testing temperature as 120°C.

### (Bending test 3)

The bending test 3 was carried out in the same manner as the bending test 1 except that the sample of the cured product was immersed in a hot water at 90°C for 72 hours in a pretreatment.

### (Example 1)

The components (A1), (B1), and (C1) were introduced into a planetary mixer and kneaded under vacuum atmosphere at 50°C for 1 hour to prepare a composition 1. The mass ratios of the components (A1), (B1), and (C1) were shown in Table 1. In this example, the term "vacuum atmosphere" means an atmosphere where the pressure is reduced to -0.8 MPa or less (gauge pressure) by a vacuum pump.

50 g of the composition 1 was heated to 100°C, and was added to a metal mold having a thickness of 3 mm and a temperature of 100°C. The composition 1 was hardened in a mini jet oven MO-921 available from Toyama Sangyo Co., Ltd. to produce a cured product 1. The hardening was carried out by heating the composition 1 from 120°C to 240°C at a heating rate of 2°C/minute and then maintaining the composition 1 at the temperature of 240°C for 8 hours. The above described properties of the cured product 1 were evaluated. The hardening conditions and the property evaluation results are shown in Table 1.

### (Examples 2 to 10 and Comparative Examples 1 to 5)

Compositions and cured products of Examples 2 to 10 and Comparative Examples 1 to 5 were produced and evaluated in the same manner as Example 1 except for using the types and mass ratios of the components and the hardening conditions shown in Tables 1 and 2. The results are shown in Tables 1 and 2. Furthermore, the DSC measurement results of Example 6 and the glass-transition temperature Tg determined in the measurement are shown in Fig. 1.

Although the same composition 1 was used in Examples 1 and 2, the hardening conditions were changed in Example 2. In the other Examples and Comparative Examples, the hardening conditions were selected in view of improving the properties of the cured products. The component (B) was not used in Comparative Examples 3 and 4, and the component (A) was not used in Comparative Example 5.

**Table 1**

| | | | Examples | | | | | | | |
|---|---|---|---|---|---|---|---|---|---|---|
| | | | 1 | 2 | 3 | 4 | 5 | 6 | 7 | 8 |
| Composition | | | 1 | 1 | 2 | 3 | 4 | 5 | 6 | 7 |
| Component (parts by mass) | Benzoxazine | (A1) | 40 | 40 | 40 | 40 | - | - | - | - |
| | | (A2) | - | - | - | - | 40 | 40 | 40 | 40 |
| | Epoxy | (B1) | 10 | 10 | - | - | 10 | - | - | - |
| | | (B2) | - | - | 10 | - | - | 10 | - | - |
| | | (B3) | | | | 10 | | | 10 | - |
| | | (B4) | - | - | - | - | - | - | - | 10 |
| | | (B') | - | - | - | - | - | - | - | - |
| | Curing agent | (C1) | 4 | 4 | 4 | 4 | 4 | 4 | 4 | 4 |
| | | (C2) | - | - | - | - | - | - | - | - |
| Cured product | | | 1 | 2 | 3 | 4 | 5 | 6 | 7 | 8 |
| Hardening condition | Heating rate (°C/min) | | 2 | 2 | 2 | 2 | 2 | 2 | 2 | 2 |
| | Temperature (°C) | | 240 | 260 | 240 | 240 | 240 | 260 | 260 | 260 |
| | Time (hrs) | | 8 | 4 | 8 | 8 | 8 | 4 | 4 | 4 |
| Property evaluation | Tg (°C) | | 231 | 233 | 265 | 255 | 264 | 284 | 271 | 289 |
| | Bending test 1 | Strength (MPa) | 144 | 156 | - | - | 171 | 142 | - | - |
| | | Elastic modulus (MPa) | 5360 | 5430 | - | - | 5180 | 5340 | - | - |
| | | Strain (%) | 2.8 | 3.0 | - | - | 3.6 | 2.7 | - | - |
| | Bending test 2 | Strength (MPa) | 118 | 124 | - | - | 120 | 111 | - | - |
| | | Elastic modulus (MPa) | 4290 | 4140 | - | - | 4140 | 4230 | - | - |
| | | Strain (%) | 3.0 | 3.3 | - | - | 3.2 | 2.7 | - | - |
| | Bending test 3 | Strength (MPa) | 136 | 136 | - | - | 139 | 114 | - | - |
| | | Elastic modulus (MPa) | 5270 | 5250 | - | - | 5080 | 5110 | - | - |
| | | Strain (%) | 2.7 | 2.7 | - | - | 2.9 | 2.3 | - | - |

**Table 2**

| | | | Examples | | Comparative Examples | | | | |
|---|---|---|---|---|---|---|---|---|---|
| | | | 9 | 10 | 1 | 2 | 3 | 4 | 5 |
| Composition | | | 8 | 9 | 10 | 11 | 12 | 13 | 14 |
| Component (parts by mass) | Benzoxazine | (A1) | - | - | 40 | - | 40 | - | - |
| | | (A2) | 40 | 40 | - | 40 | - | 40 | - |
| | Epoxy | (B1) | - | 16 | - | - | - | - | 100 |
| | | (B2) | - | - | - | - | - | - | - |
| | | (B3) | - | - | - | - | - | - | - |
| | | (B4) | 10 | - | - | - | - | - | - |
| | | (B1) | - | - | 10 | 10 | - | - | - |
| | Curing agent | (C1) | 8 | 12 | 4 | 4 | 4 | 4 | - |
| | | (C2) | - | - | - | - | - | - | 2 |
| Cured product | | | 9 | 10 | 11 | 12 | 13 | 14 | 15 |
| Hardening condition | Heating rate (°C/min) | | 2 | 2 | 2 | 2 | 2 | 2 | 2 |
| | Temperature (°C) | | 240 | 240 | 180 | 240 | 200 | 200 | 180 |
| | Time (hrs) | | 4 | 4 | 2 | 2 | 2 | 2 | 2 |
| Property evaluation | Tg (°C) | | 245 | 257 | 193 | 218 | 167 | 190 | 189 |
| | Bending test 1 | Strength (MPa) | - | - | 155 | - | - | - | - |
| | | Elastic modulus (MPa) | - | - | 5070 | - | - | - | - |
| | | Strain (%) | - | - | 4.1 | - | - | - | - |
| | Bending test 2 | Strength (MPa) | - | - | - | - | - | - | - |
| | | Elastic modulus (MPa) | - | - | - | - | - | - | - |
| | | Strain (%) | - | - | - | - | - | - | - |
| | Bending test 3 | Strength (MPa) | - | - | 134 | - | - | - | - |
| | | Elastic modulus (MPa) | - | - | 5000 | - | - | - | - |
| | | Strain (%) | - | - | 2.8 | - | - | - | - |

The glass-transition temperatures (Tg) of the cured products of Examples were significantly higher than those of the cured products of Comparative Examples. Thus, the cured products of Examples had more excellent heat resistances. Although the composition 1 was hardened under different conditions in Examples 1 and 2, the cured products of Examples 1 and 2 had approximately the same properties. Thus, the properties of the cured products were not affected by the differences of the hardening conditions. The cured products of Examples 1, 2, 5, and 6 had bending strengths approximately equal to that of the cured product of Comparative Example 1, and had more excellent elasticities and strains than those of Comparative Example 1. Thus, in Examples, high heat resistances and high deformation resistances could be achieved while maintaining sufficient strengths.

The composition of the present invention can be used for a material required to have properties such as adhesiveness, low shrinkage during hardening, and high heat resistance in various fields. For example, the composition of the present invention can be used for forming a matrix resin for composite material, a sealant for electronic device, a laminate plate, a paint, an adhesive, etc.

## Claims

1. A curable resin composition comprising (A) a polyfunctional benzoxazine compound having at least two benzoxazine rings and (B) a polyfunctional epoxy compound having at least one norbornane structure and at least two epoxy groups,
wherein compound (B) is an alicyclic epoxy compound,
the polyfunctional benzoxazine compound of (A) is a first benzoxazine compound or a second benzoxazine compound,
the first benzoxazine compound is a compound having at least two benzoxazine ring structures represented by the following formula (1): 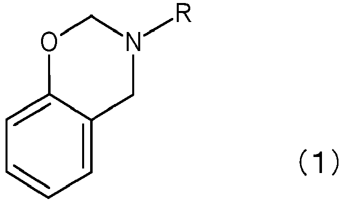 wherein R is an acyclic alkyl group having 1 to 12 carbon atoms, a cyclic alkyl group having 3 to 8 carbon atoms, or an aryl group having 6 to 14 carbon atoms, and the aryl group may have a substituent of a halogen atom or an acyclic alkyl group having 1 to 12 carbon atoms, the benzene rings in the two benzoxazine ring structures being bonded to each other, and
the second benzoxazine compound is represented by the following formula (2): 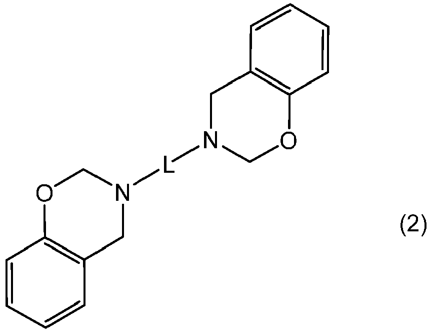 wherein L is a divalent organic group having 1 to 5 aromatic rings or an alkylene group having 2 to 10 carbon atoms.

2. The curable resin according to claim 1, where in the polyfunctional epoxy compound (B) is a compound having a 5-membered ring structure, 6-membered ring structure, or norbornane ring structure having an epoxy group shown in the following formulae:

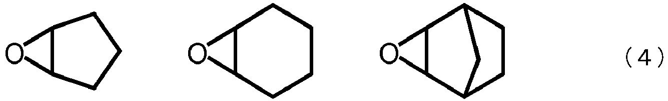

3. The curable resin composition according to claim 2, wherein the polyfunctional epoxy compound (B) is selected from the compounds of the following formulae:

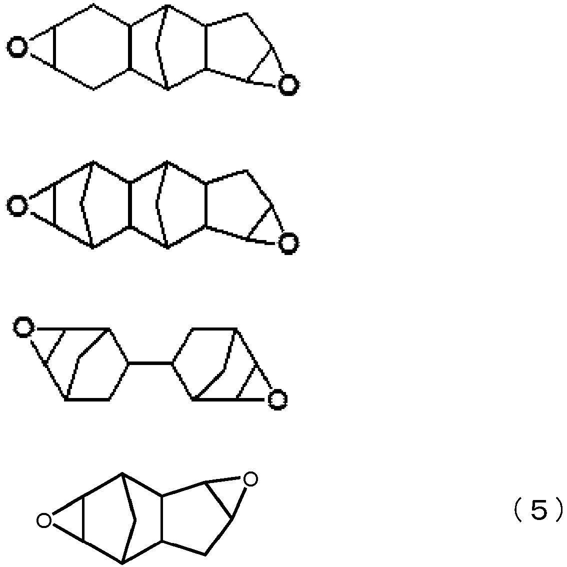

4. The curable resin composition according to any one of claims 1 to 3, further comprising (C) at least one curing agent selected from the group consisting of imidazole compounds, aromatic amine compounds, and polyfunctional phenol compounds,
wherein the content of the curing agent of (C) is more than 0 parts by mass and not more than 40 parts by mass per 100 parts by mass of the polyfunctional benzoxazine compound of (A).

5. A cured product obtained by hardening the curable resin composition according to any one of claims 1 to 4.

## Patentansprüche

1. Härtbare Harzzusammensetzung, umfassend (A) eine polyfunktionelle Benzoxazinverbindung mit mindestens zwei Benzoxazinringen und (B) eine polyfunktionelle Epoxidverbindung mit mindestens einer Norbornanstruktur und mindestens zwei Epoxidgruppen,
wobei es sich bei Verbindung (B) um eine alicyclische Epoxidverbindung handelt,
es sich bei der polyfunktionellen Benzoxazinverbindung von (A) um eine erste Benzoxazinverbindung oder eine zweite Benzoxazinverbindung handelt,
es sich bei der ersten Benzoxazinverbindung um eine Verbindung mit mindestens zwei Benzoxazinringstrukturen, die durch die folgende Formel (1) wiedergegeben werden, handelt: 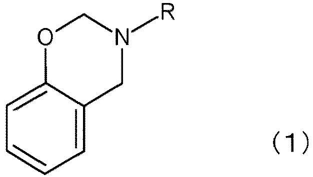
wobei R für eine acyclische Alkylgruppe mit 1 bis 12 Kohlenstoffatomen, eine cyclische Alkylgruppe mit 3 bis 8 Kohlenstoffatomen oder eine Arylgruppe mit 6 bis 14 Kohlenstoffatomen steht und die Arylgruppe einen Substituenten eines Halogenatoms oder einer acyclischen Alkylgruppe mit 1 bis 12 Kohlenstoffatomen aufweisen kann, wobei die Benzolringe in den beiden Benzoxazinringstrukturen aneinander gebunden sind, und
die zweite Benzoxazinverbindung durch die folgende Formel (2) wiedergegeben wird: 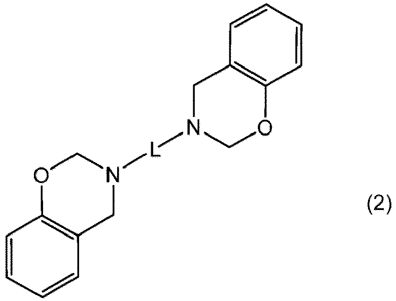
wobei L für eine zweiwertige organische Gruppe mit 1 bis 5 aromatischen Ringen oder eine Alkylengruppe mit 2 bis 10 Kohlenstoffatomen steht.

2. Härtbares Harz nach Anspruch 1, wobei es sich bei der polyfunktionellen Epoxidverbindung (B) um eine Verbindung mit einer 5-gliedrigen Ringstruktur, 6-gliedrigen Ringstruktur oder Norbornanringstruktur mit einer Epoxidgruppe gemäß dem folgenden Formeln handelt:

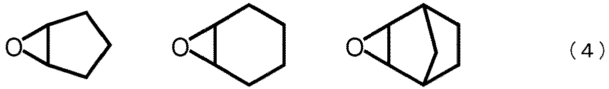

3. Härtbare Harzzusammensetzung nach Anspruch 2, wobei die polyfunktionelle Epoxidverbindung (B) aus den Verbindungen der folgenden Formeln ausgewählt ist:

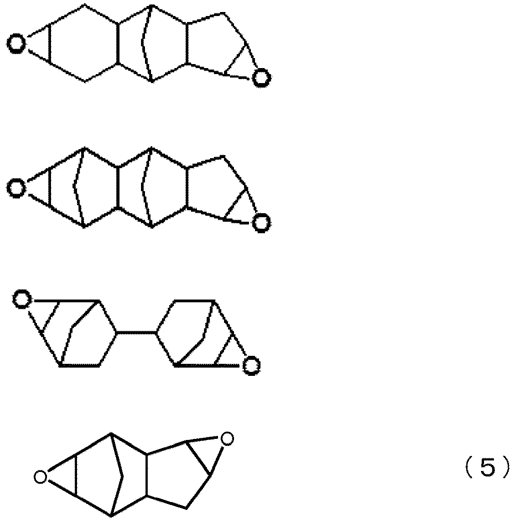

4. Härtbare Harzzusammensetzung nach einem der Ansprüche 1 bis 3, ferner umfassend (C) mindestens ein Härtungsmittel aus der Gruppe bestehend aus Imidazolverbindungen, aromatischen Aminverbindungen und polyfunktionellen Phenolverbindungen,
wobei der Gehalt des Härtungsmittels von (C) mehr als 0 Massenteile und nicht mehr als 40 Massenteile pro 100 Massenteile der polyfunktionellen Benzoxazinverbindung von (A) beträgt.

5. Gehärtetes Produkt, erhalten durch Härten der härtbaren Harzzusammensetzung nach einem der Ansprüche 1 bis 4.

## Revendications

1. Composition de résine durcissable comprenant (A) un composé de type benzoxazine polyfonctionnelle ayant au moins deux cycles benzoxazine et (B) un composé de type époxy polyfonctionnel ayant au moins une structure de norbornane et au moins deux groupes époxy,
le composé (B) étant un composé de type époxy alicyclique,
le composé de type benzoxazine polyfonctionnelle de (A) étant un premier composé de type benzoxazine ou un deuxième composé de type benzoxazine,
le premier composé de type benzoxazine étant un composé ayant au moins deux structures cycliques de benzoxazine représentées par la formule suivante (1) : 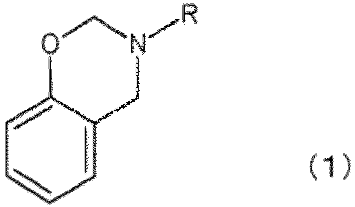
R étant un groupe alkyle acyclique ayant 1 à 12 atomes de carbone, un groupe alkyle cyclique ayant 3 à 8 atomes de carbone, ou un groupe aryle ayant 6 à 14 atomes de carbone, et le groupe aryle pouvant posséder un substituant parmi un atome d'halogène ou un groupe alkyle acyclique ayant 1 à 12 atomes de carbone, les cycles benzéniques dans les deux structures cycliques de benzoxazine étant liés l'un à l'autre, et
le deuxième composé de type benzoxazine étant représenté par la formule suivante (2) : 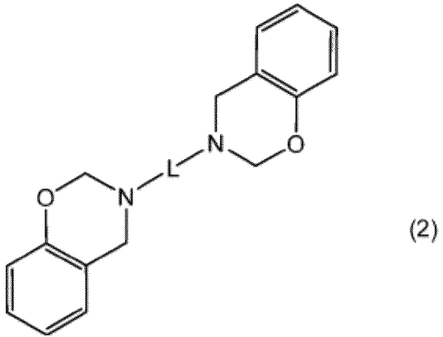
L étant un groupe organique divalent ayant 1 à 5 cycles aromatiques ou un groupe alkylène ayant 2 à 10 atomes de carbone.

2. Résine durcissable selon la revendication 1, le composé de type époxy polyfonctionnel (B) étant un composé ayant une structure cyclique à 5 chaînons, une structure cyclique à 6 chaînons, ou une structure cyclique de norbornane ayant un groupe époxy présentée dans les formules suivantes :

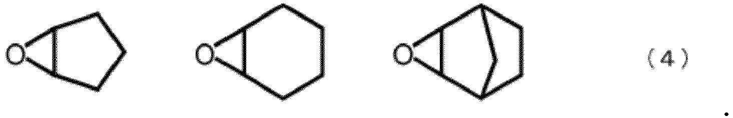

3. Composition de résine durcissable selon la revendication 2, le composé de type époxy polyfonctionnel (B) étant choisi parmi les composés des formules suivantes :

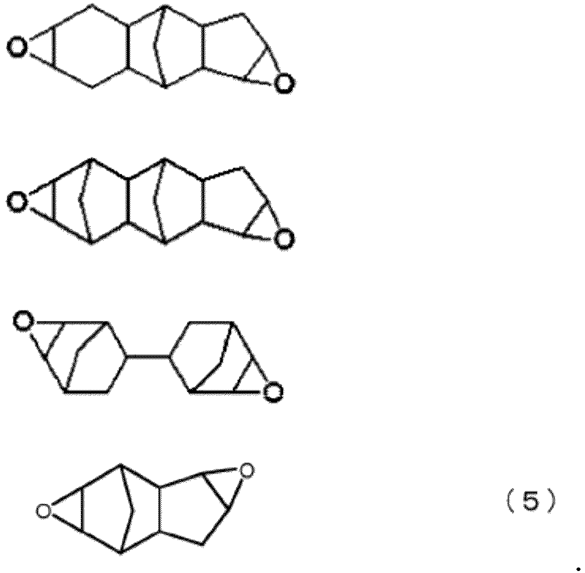

4. Composition de résine durcissable selon l'une quelconque des revendications 1 à 3, comprenant en outre (C) au moins un agent de durcissement choisi dans le groupe constitué par des composés de type imidazole, des composés de type amine aromatique, et des composés de type phénol polyfonctionnel,
la teneur de l'agent de durcissement de (C) étant supérieure à 0 partie en masse et non supérieure à 40 parties en masse par 100 parties en masse du composé de type benzoxazine polyfonctionnelle de (A) .

5. Produit durci obtenu par durcissement de la composition de résine durcissable selon l'une quelconque des revendications 1 à 4.
